# EUROPEAN PATENT APPLICATION

(11) **EP 0 540 148 A1**
(43) Date of publication of application: **05.05.1993**
(21) Application number: 92307889.3
(22) Date of filing: 28.08.1992
(51) Int. Cl.: G01M 3/36, G01M 3/32

(54) **Bag seal tester**

(30) Priority: 30.08.1991 GB 9118573
(71) Applicant: NU-TECH HANDLING LIMITED, Poole, Dorset BH12 3LL (GB)
(72) Inventor: Witheford, Kevin John, Oakdale, Poole, Dorset BH15 3QH (GB); Morgan, David, Farnham, Surrey (GB); Wigfield, Stanley, Newbury, Berkshire (GB)
(74) Representative: Archer, Philip Bruce

(57) **Abstract**

A method of checking the airtightness of a filled and sealed packet (B) of snack foods e.g. potato crisps, whereby pressure is first imparted to the vicinity of the lateral edges of the bag (B) and progresses thence towards the longitudinal median line of the bag (B).

Apparatus is described for carrying out the method and includes a number of resilient belts (52) passing around conical pulleys (48), the outermost belts (52a) contacting the edge portions of the bag (B) before the intermediate belts (52b,c).

## Description

This invention relates to the testing of sealed bags for leaks.

It is particularly concerned with a method and means for checking the air tightness of a bag containing a food product after filling and sealing the bag and before packaging the bag in a larger container.

It is well known in the food industry and particularly in that section of the industry concerned with packaging products such as potato crisps and other reconstituted potato products, and loosely packed biscuits or other snack foods, if those products are stored for even a comparatively short time in a bag which is not airtight then the product will rapidly become soft and unacceptable.

In one method of testing a bag containing such products, an operative picks up a bag to transfer it from a conveyor to a larger bag or a carton for transport or storage and in so doing squeezes the bag in the hand. If the bag is not airtight the air is pressed out of the bag and the operative throws it into a "reject" bin. Some operatives become very adroit at this operation but it is nevertheless slow, often unreliable and also digitally fatiguing.

As a consequence there has now been proposed and used a mechanical device comprising a pair of twin continuous belts, adjacent reaches of which travel in the same direction. A sealed bag of products is passed between the two belts to apply pressure thereto and by measuring the resistence to that pressure the device is able to detect leaks.

It has been found however that in some cases the product within the bag after filling settled in a heap in the centre area of the bag and the pressure imparted to the bag by the belt crushes the products, resulting in a bag which satisfies the seal test but delivers unacceptable contents.

It is an object of this invention to provide a seal testing device which is effective in testing a bag of snack or other foods without any detrimental effect on the contents.

In accordance with the invention there is provided a bag seal testing device including conveying means for conveying a product-containing sealed bag from an inlet part to an outlet part, means for imparting pressure on the bag in order to test and sense the degree of air tightness of the bag, the pressure being imparted in the first instance to the vicinity of lateral edges of the bag and progressing towards the longitudinal median line of the bag.

The means for imparting pressure on the bag may include a frame movable towards and away from the conveying means and having a plurality of endless resilient belts extending between at least one driven roller at one end of the frame and one or more freely rotatable rollers at the other end and guide means adapted to cause the laterally disposed resilient belts to contact the lateral edge portions of the bag before the centrally disposed resilient belts contact the longitudinally central portions of the bag.

The guide means may include at least one pulley located between the driven and the freely rotable rollers and having one or more conical portions formed thereon.

The above and other features will come to light from the following description-which is given by way of example with respect to the accompanying drawings in which:-
Figure 1 is a side elevation of a conveying system incorporating a seal leakage detector according to the invention
Figure 2 is a section view of the seal leakage detector seen in Figure 1
Figure 3 is a section view on the line of III-III of Figure 2
Figure 4 is a side elevation of an alternative embodiment.

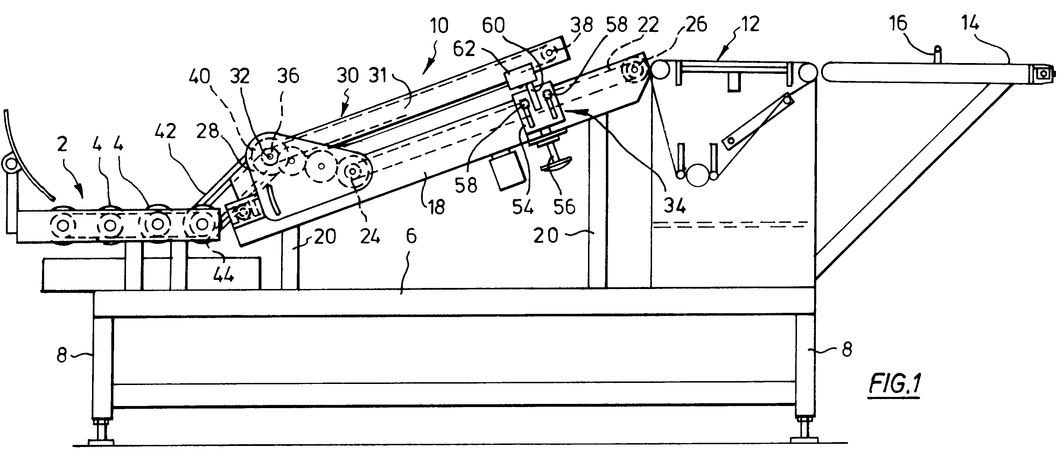

As seen in Figure 1 a conveying and checking system according to the invention includes an entry conveyor 2 having driven rollers 4 and situated at the end of a conventional and well known "fill and seal" unit. A table 6 mounted on legs 8 provides support for the conveyor 2 and adjacent the conveyor is a seal leakage detector 10. A check weigher 12 is mounted on the table adjacent the detector 10 and downstream of the weigher is a further conveyor 14 leading to a bulk package system where the filled and tested bags are packed into large bags or into cartons.

A conventional air blast reject arrangement 16 is located adjacent one side of the conveyor 14 and upon a signal from the detector 10 a bag which is found to be deficient in its seal is ejected by an air jet into a reject bin, not shown.

We refer now to the seal leakage detector, designated generally by the reference numeral 10.

A lower rectangular frame 18 is mounted on legs 20 above the table 6 and a flat continuous conveyor belt 22 extends between a driven roller 24 and a freely rotatable roller 26.

A pair of arms 28 mounted one on each side of the frame 18 and pivotally adjustable about the axis of the pulley 24, provides a support for one end of a second frame 30. The frame 30 has two side members 31 spaced apart by spacer rods 33 and is pivotable about the axis of a shaft 32. The end most portion of the frame distal from the shaft 32 rests on a pressure detector 34 which is mounted on one side of the frame 18.

A grooved roller 36 is secured to the shaft 32 and a further grooved roller is freely rotable about a shaft 38 located at the end of the frame 30 remote from the shaft 32. A pulley 40 mounted on the shaft 32 is driven by a belt 42 extending from a pulley 44 on one of the rollers 4 of the conveyor 2.

Freely mounted for rotation on shafts 46 between the side members 31 are a pair of conical pulleys 48 which are formed with grooves 50 on their conical peripheries.

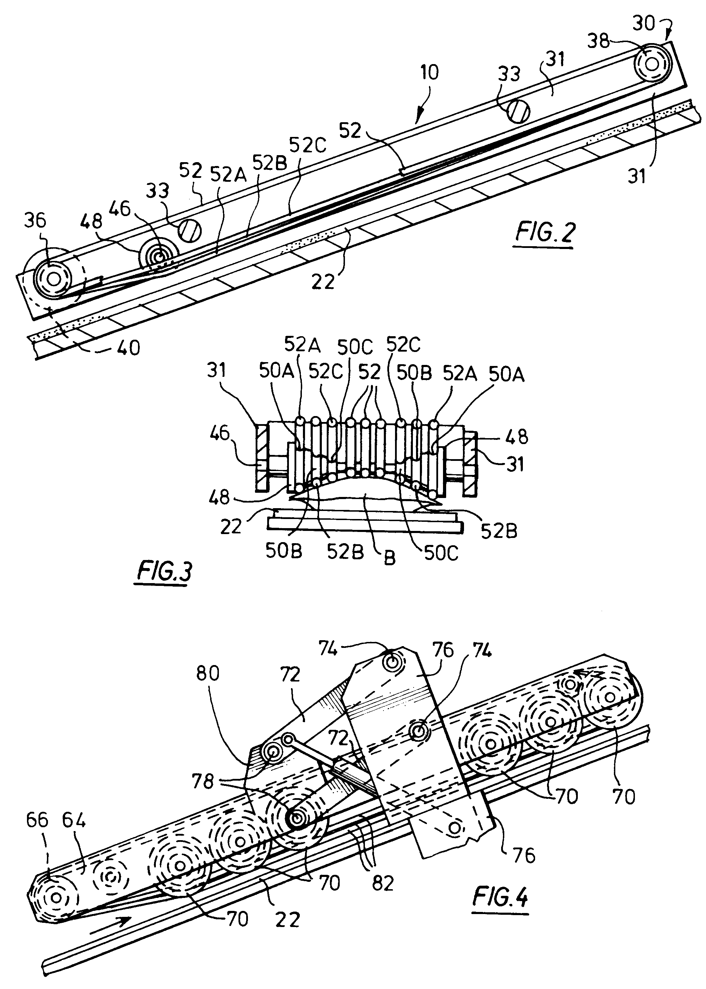

As seen clearly in Figures 2 and 3, round elastic belts 52 extend between the pulleys 36 and 38 and the lower reaches of those belts are deflected by different amounts as they are engaged by grooves 50 in the pulleys 48. Thus, the outer most belts 52A are engaged in the grooves 50A; the next inner most belts 52B are engaged in grooves 50B and the inner most belts 52C are engaged by the grooves 50C.

Towards the end of the frame 18 adjacent the check weigher is a bracket 54, adjustable height wise by means of an adjusting screw 56 and secured in its adjusted position by set screws 58 threaded into holes in the frame 18. A micro switch 60 is mounted on the bracket 54, and a bracket 62 on one side member 31 of the frame 30 is shown in contact with that switch.

In use a filled and sealed packet of snack food, e.g. potato crisps, descends from the fill and seal mechanism to the ingoing conveyor 2 and is fed along the driven rollers 4 onto the continuous conveyor belt 2 where it is conveyed between that belt and the lower reaches of the round belt 52 of the detector 10.

As the bag progress along the line of the conveyor the belts 52A engage its edgemost portions tending to cause the air therein to be forced towards the centre line of the bag. Similarly belts 52B and 52C progressively force the air to the centre of the bag so that the frame 30 is eventually raised to position the lug 62 clear of the micro-switch 60, the frame being supported by the compressed air in the bag. The central belts 52C are thus resting on the top surface of the bag where a "bubble" is formed within the bag.

The weight of the detector assembly 10 is so calculated that the air within the bag will be maintained therein if the seal is effective, but the assembly 10 will descend if there is any leakage due to a defective seal.

The electrical circuit is designed so that when the micro-switch is contacted by the lug 62 the air blast rejection arrangement is actuated to remove the deficient bag from the conveyor 14. A relay or other device may be incorporated in the circuit to allow for the time taken for the defective bag to travel from the leakage detector to the air blast rejector nozzle.

In an alternative arrangement seen in Figure 4 a frame 64 has a driven roller 66, a freely rotatable roller 68 and intermediate grooved conical rollers 70. The rollers 70 are similar in form to the conical pulleys 48 in the earlier embodiment.

The frame 64 is mounted on parallel links 72 which are rockable about pivot pins 74 on a bracket 76 secured to the lower frame 18, and the end portion of the links are pivoted on pins 78 fast in a bracket 80 which is secured, e.g. by welding to the frame 64.

Resilient round belts 82 pass around the driven rollers 66 and free rollers 68 and are guided by grooves in the rollers 70 as well as rollers 68 and thus act on the filled bag in the same way as in the first embodiment.

The frame 64 is raised or lowered by a piston cylinder unit which acts on one of the parallel links 72.

## Claims

1. A bag seal testing device including conveying means for conveying a product-containing sealed bag from an inlet part to an outlet part, means for imparting pressure on the bag in order to test and sense the degree of airtightness of the bag, the pressure means being imparted in the first instance to the vicinity of lateral edges of the bag and progressing towards a longitudinal median line of the bag.

2. A bag seal testing device according to claim 1 wherein the means for imparting pressure on the bag includes a frame movable towards and away from the conveying means and having a plurality of endless resilient belts extending between at least one driven roller at one end of the frame and one or more freely rotatable rollers at the other end, and guide means adapted to cause the laterally disposed resilient belts to contact the lateral edge portions of the bag before the centrally disposed resilient belts contact the longitudinal central portions of the bag.

3. A bag seal testing device according to claim 2 wherein the frame is pivotally mounted at one end to part of the conveying means.

4. A bag seal testing device according to claim 3 wherein the frame is pivotally mounted towards the inlet part of the conveyor.

5. A bag seal testing device according to claim 2 wherein the frame is movable towards and away from the conveying means by a parallel linkage system.

6. A bag seal testing device according to any of the claims 2 to 5 wherein there is provided means for sensing the pressure imparted to the bag by the seal testing device comprising a micro-switch located on the conveying means and adapted to co-operate with part of the frame of the pressure imparting means or a micro-switch on the frame of the pressure imparting means adapted to co-operate with part of the conveying means.

7. A bag seal testing device according to claim 6 wherein the micro-switch is adjustable with respect to the pressure imparting means on the conveying means.

8. A bag seal testing device according to claims 6 or 7 whereby the micro-switch and the frame or the conveying means are maintained out of contact with one another when a bag being tested is efficiently sealed, but make contact when the bag is not efficiently sealed.

9. A bag seal testing device according to claims 7 or 8 wherein a bag rejection system is provided adjacent the outlet part of the conveying means and wherein the bag rejection system is actuated by means which includes the micro-switch.

10. A bag seal testing device according to claim 9 where the bag rejection system includes an air blast nozzle having a valve which is actuated by the micro-switch.

11. A method of testing a filled and sealed bag of snack or other foods whereby the filled and sealed bag is acted upon by bag engaging means which first engage the outermost edge portions of the bag and then progressively tend to urge air within the bag towards the median line of the bag.

12. A method according to claim 11 wherein the air within the bag supports the bag engaging means when the bag is efficiently sealed, but does not support the bag engaging means when the bag is not efficiently sealed, and the bag is then automatically rejected.

13. A bag seal testing device and method providing progressive inward application of pressure to the bag being tested.
